# FASCICULE DE BREVET EUROPEEN

(11) **EP 1 947 002 B1**
(45) Date de publication et mention de la délivrance du brevet: **27.07.2011**
(21) Numéro de dépôt: 06755347.9
(22) Date de dépôt: 18.05.2006
(51) Int. Cl.: B62K 19/02

(54) **CADRE DE BICYCLETTE**
FAHRRADRAHMEN
BICYCLE FRAME

(30) Priorité: 03.11.2005 ES 200502674
(43) Date de publication de la demande: 23.07.2008
(73) Titulaire: Orbea, S. Coop. Ltda., 48269 Mallabia (Bizkaia) (ES)
(72) Inventeur: NARBAIZA GÓMEZ, Xabier, 20600 EIBAR ( Gipuzkoa) (ES)
(74) Mandataire: Urizar Barandiaran, Miguel Angel
(86) Numéro de dépôt international: PCT/ES2006/000260
(87) Numéro de publication internationale: WO 2007/051871

(56) Documents cités:
- EP-A1- 1 544 092
- DE-A1- 19 629 740
- DE-A1- 19 629 740
- DE-U1- 20 207 870
- US-A- 4 015 854
- US-A- 4 015 854
- US-A- 4 941 674
- US-A- 4 941 674

## Description

Les nouveaux matériaux qui surgissent avec force dans le secteur du vélo (matériaux composés, fibres thermostables, nouveaux alliages métalliques,...) donnent lieu, à leur tour, à l'apparition de nouvelles méthodes de fabrication de cadres de bicyclette.

De cette manière, de nouvelles et nombreuses options créatives s'ouvrent aux concepteurs et aux constructeurs, qui peuvent atteindre divers objectifs qui étaient inconcevables jusqu'à présent, en raison des limitations qui existaient dans l'état actuel de la technique.

C'est dans ce contexte qu'est présenté le cadre de bicyclette qui fait l'objet de l'invention, où le tube diagonal est à double effet. Ses formes/sections concrètes poursuivent un double objectif :
1.- Doter le cadre du rendement maximum, au moyen d'une structure ultrarigide, avec des tubes principaux (où le tube diagonal est essentiel) ayant un moment d'inertie élevé.
2.- Protéger le cycliste dans des conditions adverses de boue et de terrain sans consistance, en faisant un travail de "garde-boue". De cette façon, le tube diagonal évite, pour une large part, l'impact de différentes particules sur le cycliste, en remplaçant, de façon avantageuse, le garde-boue conventionnel.

Tout le long de l'histoire de la bicyclette, l'un des objectifs de tout fabricant de modèles à hautes prestations a été l'optimisation du rapport rigidité/poids. Autrement dit, l'obtention du maximum de rigidité avec le minimum de poids.

La minimisation du poids répond au besoin de réduire au maximum la masse que le cycliste devra faire monter dans les dénivellations positives et faciliter les accélérations, car une moindre masse permet de plus grandes accélérations sous l'effet de la même Force appliquée (F=m*a).

Cependant, dans la quête du minimum de poids, on a fréquemment négligé la rigidité du cadre, propriété essentielle au moment d'assurer le contrôle et la stabilité du véhicule, mais aussi pour pouvoir profiter de l'énergie du cycliste. Autrement dit, un cadre qui, en raison d'une rigidité insuffisante, subit des déformations sous l'application des forces de pédalage du cycliste, suppose un gaspillage de l'énergie totale appliquée. Cette perte d'énergie est proportionnelle au carré de la déformation de la structure (Énergie ½ *Rigidité structure*Déformation²).

De cette manière, il est clair que, pour optimiser le rendement d'une bicyclette, il faut non seulement en réduire le poids, mais aussi maintenir, en même temps, des niveaux élevés de rigidité.

Le tube diagonal joue un rôle essentiel au moment d'apporter au cadre de la bicyclette la rigidité nécessaire sous l'action de forces latérales et de torsion.

Après de nombreux calculs théoriques et diverses études, le demandeur a constaté, d'une manière irréfutable, que la zone moyenne-supérieure du tube diagonal est la zone critique en ce qui concerne sa rigidité, aussi devrons-nous tendre à lui donner le plus grand moment d'inertie possible par rapport à sa génératrice. La limite doit être marquée par une épaisseur de sécurité minimale permettant d'assurer l'intégrité de la structure face à des impacts éventuels et, d'un autre côté, par une limitation de poids maximum.

L'objet de l'invention est de résoudre les deux problèmes mentionnés :
- une rigidité maximale du tube diagonal avec un minimum de poids.
- une protection de l'utilisateur contre les éclaboussures provoquées par la roue avant.

La Brevet DE-A-196 29 740 décrit un cadre de bicyclette, de ceux qui comportent un tube diagonal de section quadrangulaire, pour lequel au moins, dans la zone moyenne-supérieure du tube diagonal, qui fait face à la roue avant de la bicyclette, le côté extérieur de cette section quadrangulaire est concave.

Plus concrètement, le cadre de bicyclette qui fait l'objet de l'invention est de ceux qui comportent un tube diagonal à section quadrangulaire, qui se caractérise par le fait que la dimension de ce côté extérieur augmente peu à peu, approximativement de la section supérieure à la section centrale du tube diagonal.

Dans l'invention, sont également disposées deux nervures aux extrémités inférieures du tube diagonal, qui répondent à des calculs théoriques, mais qui, à leur tour, sont d'une grande aide, car l'utilisation d'accessoires tels que garde-boue et plaques protectrices ancrées au tube diagonal, est habituelle dans des conditions adverses comme l'eau, la boue, une pierre isolée ou une combinaison de ces conditions. Cependant, toutes s'accompagnent habituellement de complications de montage et de sustentation, ainsi que de protection.

Le cadre de bicyclette qui fait l'objet de cette invention a pour propos d'intégrer, dans une certaine mesure, le travail effectué par ces accessoires dans le même cadre. En profitant de la façon particulière de fabrication des cadres en fibre de carbone monocoque, on a doté le tube diagonal de sections qui réalisent l'effet protecteur des petits garde-boue, sans supposer une surcharge quant au poids, à la fonctionnalité ou au montage.

Pour mieux comprendre l'objet de la présente invention, on représente sur les plans une forme préférentielle de réalisation pratique, susceptible de changements accessoires qui n'en dénaturent pas le fondement.
La figure 1 est une vue générale schématique de profil en long d'un cadre de bicyclette, où l'on a fait ressortir la zone moyenne-supérieure (11) du tube diagonal à double effet (1) sur lequel repose l'invention.
La figure 2 est une vue en détail de la figure 1.
La figure 3 est une vue schématique de profil correspondant à la figure 2.
Les figures 4, 5 et 6 représentent des sections du tube diagonal (1) dans sa zone moyenne-supérieure (11) selon les indications, respectivement, A:A, B:B et C:C des figures 1 et 2.

On décrit ci-dessous un exemple de réalisation pratique, non limitative, de la présente invention.

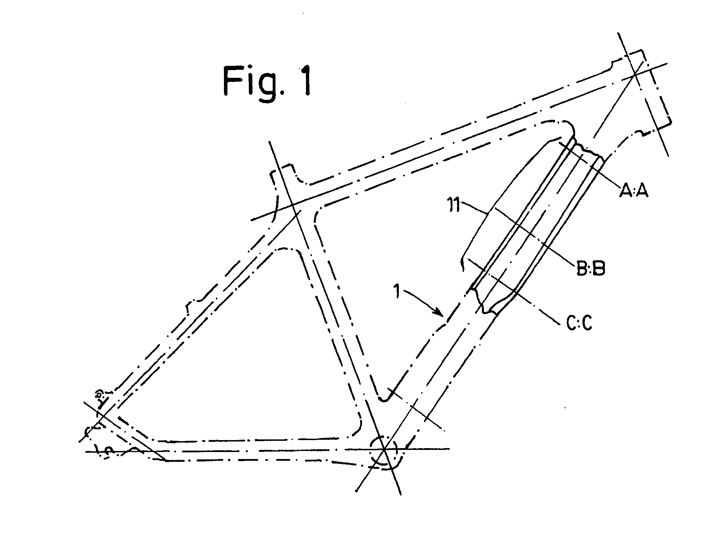

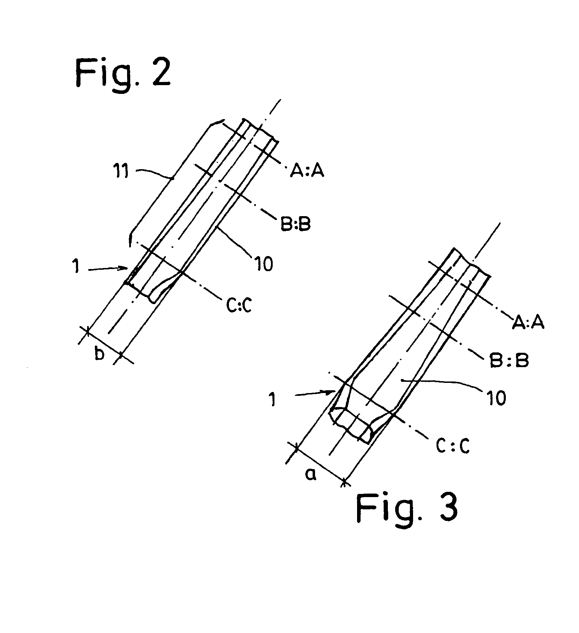

Dans un cadre de bicyclette conventionnel, le tube diagonal (1) a une section constante. C'est pourquoi la section de l'ensemble du tube doit être la plus grande dont on aura besoin pour couvrir la résistance/rigidité qu'il faut supporter dans sa zone critique, qui est la zone moyenne-supérieure (11) -voir figures 1 et 2-.

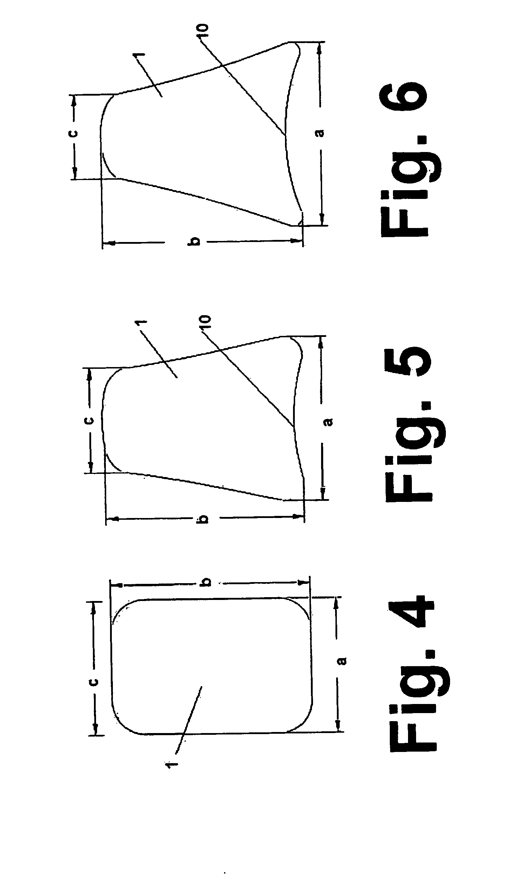

Dans le nouveau cadre de bicyclette préconisé, le tube diagonal (1) selon l'objet de l'invention a une section variable, différente dans ses différentes parties de sa zone moyenne-supérieure (11) -voir figures 4 à 6-.

La zone critique en ce qui concerne la résistance/rigidité est la zone moyenne-supérieure (11). Selon le cadre de bicyclette qui fait l'objet de l'invention, le tube diagonal (1) présente une section variable dans cette zone moyenne-supérieure (11), et c'est là que la section offre le plus grand moment d'inertie par rapport à sa génératrice, avec les particularités que la section est polygonale et qu'elle présente, au moins, un de ses côtés (10) courbe-concave -voir figures 5 et 6- et avec la particularité additionnelle que le tube diagonal (1) dans cette zone (11) a une largeur (a) plus grande que la largeur du pneu de la roue avant de la bicyclette -voir figures 5 et 6- ce qui fait que ce sera cette zone qui offrira une plus grande protection, car le flux de particules qui ne seront pas rejetées par ce tube (1) aura une trajectoire telle qu'il ne devrait pas heurter la tête du cycliste. Dans le cas hypothétique où le cycliste aurait une trajectoire droite, toutes les particules qui pourraient heurter son visage (la zone la plus dangereuse pour le contrôle du véhicule) seront arrêtées en raison, précisément, de la configuration spécifique du tube diagonal (1) dans cette zone.

Le rapport entre largeur frontale (a), largeur postérieure (c) et grosseur (b) du tube diagonal (1) est variable dans les différentes sections.

Pour la réalisation représentée -voir figures 4 à 6-, les différentes sections sont à sommets émoussés et la grosseur (b) est maintenue constante en variant la largeur postérieure (c) entre une valeur minimale -voir figure 6- dans la section C:C la plus basse de cette zone moyenne-supérieure (11) du tube diagonal (1) et une valeur maximale c = a -voir figure 4- dans la section A:A la plus élevée de cette zone moyenne-supérieure (11) du tube diagonal (1).

La largeur frontale (a) est plus grande dans la zone moyenne-supérieure (11) du tube diagonal (1). En particulier, dans cette zone (11), la largeur (a) est plus grande que la largeur du pneu de la roue et son profil est courbe-concave (10) le tube diagonal (1) ayant la fonction de garde-boue.

## Revendications

1. Cadre de bicyclette, de ceux qui comportent un tube diagonal (1) de section quadrangulaire, pour lequel au moins, dans la zone moyenne-supérieure (11) du tube diagonal (1), qui fait face à la roue avant de la bicyclette, le côté extérieur (10) de cette section quadrangulaire est concave, **se caractérisant par le fait que** la dimension (a) de ce côté extérieur (10) augmente peu à peu, approximativement de la section supérieure (A:A) à la section centrale (C:C) du tube diagonal (1).

2. Cadre de bicyclette, selon la revendication antérieure, **se caractérisant par le fait qu'**au moins dans une partie de cette zone moyenne supérieure (11), la largeur (a) du tube diagonal (1) est plus grande que la largeur du pneu de la roue avant de la bicyclette.

## Claims

1. Bicycle frame, of the type which consist of a diagonal tube (1) of quadrangular section, in which at least, in the mid-upper zone (11) of the diagonal tube (1), which faces the bicycle front wheel, the outer side (10) of said quadrangular section is concave, **characterized** because the size (a) of said outer side (10) increases little by little, from approximately the upper section (A:A) to the central section (C:C) of the diagonal tube (1).

2. Bicycle frame, according to aforementioned claim, **characterized by** the fact that in at least part of said mid-upper zone (11), the width (a) of the diagonal tube (1) is greater than the width of the tyre of the front wheel of the bicycle.

## Patentansprüche

1. Fahrradrahmen mit diagonalem Rohr (1) mit viereckiger Sektion, in der mindestens in der mittleren höheren Zone (11) des diagonalen Rohrs (1), die dem Vorderrad des Fahrrads gegenüber liegt, die Außenseite (10) dieser viereckigen Sektion hohl ist; **dadurch gekennzeichnet, dass** die Dimension (a) dieser Außenseite (10) nach und nach zunimmt, ausgehend etwa von der oberen Sektion (A:A:) bis zur Mitte der Sektion (C:C) des diagonalen Rohrs (1).

2. Fahrradrahmen gemäß des vorhergehenden Anspruchs, **dadurch gekennzeichnet, dass** in mindestens einem Teil der mittleren höheren Zone (11) die Breite (a) des diagonalen Rohrs (1) größer ist als die Breite des Mantels des Vorderrads des Fahrrads.
